# EUROPÄISCHE PATENTSCHRIFT

(11) **EP 1 330 628 B1**
(45) Veröffentlichungstag und Bekanntmachung des Hinweises auf die Patenterteilung: **19.05.2004**
(21) Anmeldenummer: 01984527.0
(22) Anmeldetag: 31.05.2001
(51) Int. Cl.: G01B 9/04

(54) **VERFAHREN ZUR KORREKTUR PHYSIKALISCH BEDINGTER FEHLER BEI DER MESSUNG MIKROSKOPISCHER OBJEKTE**
METHOD FOR CORRECTING PHYSICAL ERRORS IN MEASURING MICROSCOPIC OBJECTS
PROCEDE POUR LA CORRECTION D'ERREURS PHYSIQUES DANS LA MESURE D'OBJECTS MICROSCOPIQUES

(30) Priorität: 31.05.2000 DE 10027221
(43) Veröffentlichungstag der Anmeldung: 30.07.2003
(73) Patentinhaber: PDF Solutions GmbH, 80331 München (DE); MUETEC Automatisierte Mikroskopie und Messtechnik GmbH, 80993 München (DE)
(72) Erfinder: HARTMANN, Hans, 82234 Wessling (DE); WAAS, Thomas, 80538 München (DE); EISENMANN, Hans, 81677 München (DE); BRÜCK, Hans-Jürgen, 81247 München (DE)
(74) Vertreter: Schoppe, Fritz, Dipl.-Ing.
(86) Internationale Anmeldenummer: PCT/EP2001/006200
(87) Internationale Veröffentlichungsnummer: WO 2001/092818

(56) Entgegenhaltungen:
- WO-A-00/33250
- WO-A-97/06461
- WO-A-98/28592

## Beschreibung

Die vorliegende Erfindung bezieht sich auf ein Verfahren zur Korrektur physikalisch bedingter Fehler bei der Messung eines Objekte, und insbesondere auf ein Verfahren zur Korrektur physikalisch bedingter Fehler bei der Messung der Breite von mikroskopischen Objekten, deren Abmessungen in der Größenordnung der Wellenlänge der Beleuchtungsquelle liegen.

Die Weiterentwicklung auf dem Gebiet der Halbleitertechnologie führt zu immer feineren Chipstrukturen, was mit einer zunehmenden Schaltungskomplexität verbunden ist. Neben Problemen bei der Herstellung solcher Strukturen existieren ferner Probleme bei der Überprüfung solcher Strukturen, nämlich dann, wenn die erzeugten Strukturen abgebildet werden, um diese zu kontrollieren, z.B. durch Messen der Breite derselben. Ein Beispiel für ein herkömmliches Verfahren ist die Vermessung von Strukturbreiten unter Verwendung von optischen Mikroskopen, wobei das zu vermessende Objekt im Durchlicht oder Auflicht beleuchtet wird, und anschließend das sich daraus ergebende Intensitätsbild betrachtet und vermessen wird.

Ein Nachteil dieser Verfahren besteht darin, daß sich das Intensitätsbild aus Überlagerungen zusammensetzt, die sowohl von der zu messenden Struktur als auch von Strukturen herrühren, die in der Umgebung der zu vermessenden Struktur angeordnet sind. Somit wird das Intensitätsbild der zu vermessenden Struktur und damit das Meßergebnis also direkt von der Umgebung des Meßobjekts beeinflußt bzw. verfälscht. Dieses Phänomen ist unter dem Begriff "Proximity Effect" bekannt. Durch die Verfälschung der Intensitätsbilder ist bei Messungen der Breite des Objektes somit keine gesicherte Aussage über die Form und die Abmessungen der erzeugten Strukturen und damit über die Zuverlässigkeit des Herstellungsprozesses möglich.

Der vorliegenden Erfindung liegt die Aufgabe zugrunde, ein Verfahren zur Korrektur physikalischer Fehler bei der Messung eines Objekts zu schaffen, so daß Meßfehler aufgrund von Einflüssen benachbarter Strukturen vermieden werden.

Diese Aufgabe wird durch ein Verfahren gemäß Anspruch 1 gelöst.

Der vorliegenden Erfindung liegt die Erkenntnis zugrunde, daß die verfälschung des Intensitätsbildes und die damit verbundene Auswirkung auf das Meßergebnis, welche bei einer Bestrahlung oder Beleuchtung des zu messenden Objektes durch dessen Umgebung erzeugt wird, dadurch korrigiert werden kann, daß das Bild des Meßobjekts unter Berücksichtigung der Fehlerbeiträge aus der Objektumgebung korrigiert wird. Ausgehend von dem solchermaßen erzeugten Bild wird der Einfluß. der Struktur- bzw. Objektumgebung auf das Meßergebnis eliminiert. Das so korrigierte Meßergebnis entspricht dann den tatsächlichen physischen Dimensionen des Meßobjekts.

Gemäß einem bevorzugten Ausführungsbeispiel wird ein Korrekturverfahren geschaffen, bei dem zunächst ausgehend von dem erzeugten Bild ein Intensitätsbild des zu messenden Objekts samt seiner Umgebung erfaßt wird, und aus dem globalen Bild wird speziell für die zu messende Struktur ein Korrekturwert bestimmt, abhängig von Strukturen, die benachbart zu dem zu messenden Objekt angeordnet sind. Abschließend wird das Intensitätsbild vermessen und abhängig von dem bestimmten Wert korrigiert. Das Ergebnis dieser Messung ist dann stets ein Meßwert, der eine Korrektur durchlaufen hat, und dadurch näher an der tatsächlichen Größe des Meßobjektes liegt.

Gemäß einem weiteren bevorzugten Ausführungsbeispiel der vorliegenden Erfindung beinhaltet das erfaßte Bild oder Intensitätsbild das zu messende Objekt sowie dessen Strukturumgebung, so daß bei der Bestimmung des oder der Korrekturwerte die Meßfehler, abhängig von dem erfaßten Intensitätsbild enthaltene Strukturumgebung bestimmt und korrigiert werden.

Gemäß einem weiteren bevorzugten Ausführungsbeispiel der vorliegenden,Erfindung umfaßt das erfaßte Bild bzw. das Intensitätsbild das zu messende Objekt samt seiner relevanten Umgebung, die einen Einfluß auf den zu berechnenden Korrekturwert hat. Ferner wird eine Layout-Beschreibung des zu messenden bzw. abzubildenden Objekts und dessen Strukturumgebung bereitgestellt, und der Korrekturfaktor für das Meßergebnis wird nur abhängig von der bereitgestellten Layout-Beschreibung bestimmt.

Gemäß einem weiteren bevorzugten Ausführungsbeispiel wird das als Bild oder Intensitätsbild abgebildete mikroskopische Objekt vermessen und das tatsächliche Intensitätsbild mittels einer Korrekturfunktion den idealen Bedingungen angenähert.

Als Bestrahlungsquelle sind neben einer Lichtquelle auch andere. Strahlungsquellen, wie z.B. eine Elektronenstrahlquelle oder eine Röntgenstrahlquelle, geeignet.

Nachfolgend werden anhand der beiliegenden Zeichnungen bevorzugte Ausführungsbeispiele der vorliegenden Erfindung näher beschrieben. Es zeigen:
- Fig. 1: ein Flußdiagramm, das ein erstes Ausführungsbeispiel des erfindungsgemäßen Verfahrens darstellt; und
- Fig. 2: ein Flußdiagramm, das ein zweites Ausführungsbeispiel des erfindungsgemäßen Verfahrens darstellt.

Gemäß der vorliegenden Erfindung wird ein Verfahren geschaffen, welches eine Korrektur der physikalisch bedingten Fehler bei der Messung eines Objekts ermöglicht, wobei in der nachfolgenden Beschreibung der bevorzugten Ausführungsbeispiele exemplarisch das Verfahren für die optische Mikroskopie beschrieben wird, wobei jedoch für einen Fachmann offensichtlich ist, daß das erfindungsgemäße Verfahren für alle abbildenden Meßverfahren angewandt werden kann.

Ganz allgemein gesprochen wird gemäß der vorliegenden Erfindung ein Bild des zu vermessenden Objekts erzeugt, das abgebildete Objekt wird vermessen, und das Meßergebnis wird unter Berücksichtigung der Objektumgebung korrigiert, so daß das korrigierte Meßergebnis dann den tatsächlichen physischen Dimensionen des Meßobjekts entspricht und bei einer weitergehenden Verarbeitung zuverlässig eingesetzt werden kann.

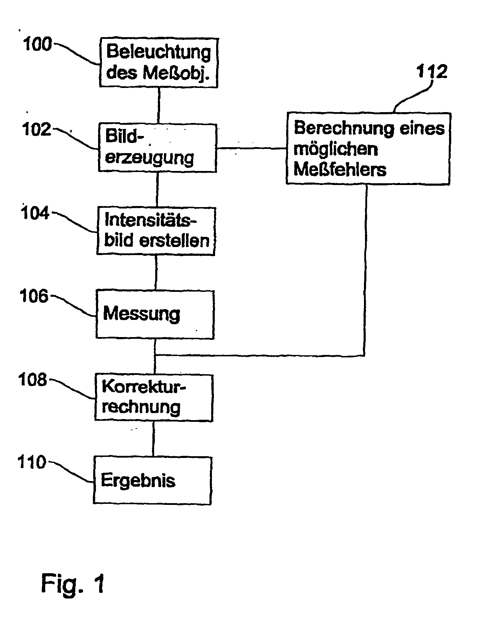

In Fig. 1 ist ein erstes Flußdiagramm gezeigt, welches ein erstes Ausführungsbeispiel des erfindungsgemäßen Verfahrens darstellt. In einem ersten Schritt 100 wird das Meßobjekt, z.B. mittels Licht, beleuchtet, und im Schritt 102 wird ein Bild des zu messenden Objekts erzeugt. Anschließend wird aus dem im Schritt 102 erzeugten Bild ein Intensitätsbild im Schritt 104 erzeugt bzw. erstellt, und das abgebildete Objekt wird im Schritt 106 vermessen. Anschließend erfolgt, abhängig von einem bestimmten Meßfehler, im Schritt 108 die Korrekturberechnung und das korrigierte Meßergebnis wird im Schritt 110 ausgegeben. Gemäß dem in Fig. 1 dargestellten Ausführungsbeispiel erfolgt die Bestimmung des möglichen Meßfehlers im Schritt 112, in dem abhängig von dem im Schritt 102 erzeugten Bild der durch die Strukturumgebung des Objekts hervorgerufene Meßfehler bzw. mögliche Meßfehler berechnet wird und nachfolgend zur Korrekturberechnung im Schritt 108 zugeführt wird.

Im Falle der optischen Mikroskopie wird aus den Kenndaten des Mikroskops, nämlich aus der Wellenlänge und dem Spektrum der Beleuchtungsquelle, der Beleuchtungsart (Auflicht oder Durchlicht), dem Vergrößerungsfaktor, den Objektivwerten (numerische Apertur und Sigma) das Übertragungsverhalten des Meßmikroskops berechnet.

Ausgehend von diesem berechneten Übertragungsverhalten wird das Ergebnis der Messung im Schritt 106 im Schritt 108 so korrigiert, daß die Auswirkungen des optischen "proximity effect" auf das Meßergebnis eliminiert werden, so daß der ermittelte Meßwert den tatsächlichen physikalischen Dimensionen entspricht.

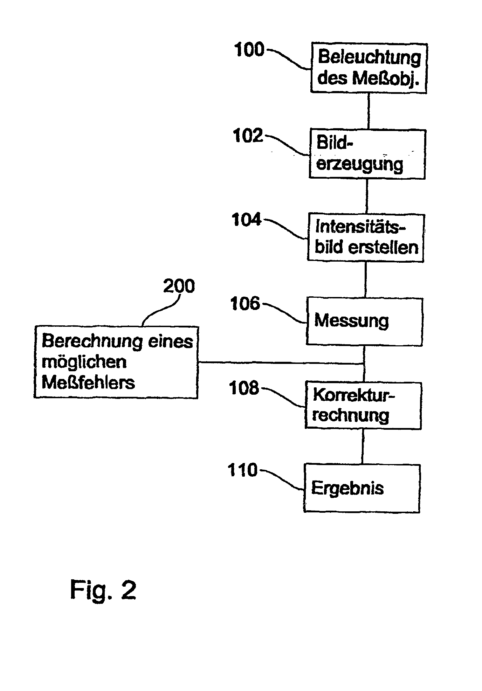

Hinsichtlich der vorliegenden Erfindung wird darauf hingewiesen, daß diese insbesondere bei Meßobjekten zum Einsatz kommt, die Abmessungen aufweisen, bei denen die verwendeten Abbildungsprozesse sowie die Strukturdichte zu den oben angesprochenen Meßfehlern, wie z.B. eine Linienverbreiterung u.ä., führen. Diese Objekte haben Abmessungen im mikroskopischen Bereich, die in der Größenordnung der Wellenlänge der Beleuchtungsquelle liegen, z.B. 0,5 µm bis 10µm. Anhand der Fig. 2 wird ein zweites Ausführungsbeispiel des erfindungsgemäßen Verfahrens beschrieben, wobei die bereits anhand der Fig. 1 beschriebenen Blöcke bzw. Schritte die gleichen Bezugszeichen haben. Gegenüber dem in Fig. 1 beschriebenen Ausführungsbeispiel unterscheidet sich dieses dahingehend, daß die Berechnung der möglichen Meßfehler unabhängig von dem im Schritt 102 erzeugten Bild erfolgt. Gemäß diesem Ausführungsbeispiel wird unabhängig von dem tatsächlich erzeugten Bild im Schritt 200 von einer externen Quelle die erforderlichen Daten empfangen, um den Meßfehler zu bestimmen. Diese externen Daten umfassen beispielsweise die Originalstuktur, z.B. in Form einer Layout-Beschreibung, die den Erwartungswert des Meßobjekts einschließlich dessen Strukturumgebung darstellt. Aufgrund dieser Daten wird der mögliche Meßfehler berechnet und die bereits anhand der Fig. 1 beschriebene Korrektur durchgeführt.

Bei dem in Fig. 2 gezeigten Ausführungsbeispiel kann gemäß einer Ausgestaltung die Erzeugung des Bildes im Schritt 102 derart erfolgen, daß lediglich das abzubildende Objekt erfaßt wird, ohne daß die das Objekt umgebende Struktur erfaßt wird. Die Korrektur der durch die Umgebung hervorgerufenen Meßfehler erfolgt auf die oben beschriebene Art und Weise anhand der Berechnung eines möglichen Meßfehlers im Schritt 200.

In beiden Verfahren kann die Korrektur im Schritt 108 abhängig von einer bestimmten Korrekturfunktion erfolgen, die den idealen Bedingungen angenähert ist.

## Patentansprüche

1. Verfahren zur Korrektur von Fehlern, die bei einer Vermessung eines Objekts, dessen Abmessungen im Bereich einer Wellenlänge einer Strahlung liegen, die zur Vermessung herangezogen wird, aufgrund des Proximitätseffekts auftreten, mit folgenden Schritten:
(a) Erzeugen (102) eines Intensitätsbildes des zu vermessenden Objekts; ,
(b) Vermessen (106) des in dem erzeugten Intensitätsbild abgebildeten, interessierenden Objekts;
(c) Bestimmen (112; 200) eines aufgrund des Proximitätseffekts aufgetretenen Meßfehlers, der durch Strukturen hervorgerufen wird, die benachbart zu dem zu vermessenden Objekt angeordnet sind; und
(d) Korrigieren (108) der Messung aus Schritt (b) abhängig von dem bestimmten Meßfehler.

2. Verfahren nach Anspruch 1, bei dem das erfaßte Bild das Objekt und dessen Strukturumgebung umfaßt, wobei im Schritt (c) der Meßfehler abhängig von der im erfaßten Bild enthaltenen Strukturumgebung bestimmt wird.

3. Verfahren nach Anspruch 1, bei dem das erfaßte Bild nur das abzubildende Objekt umfaßt, und bei dem ferner eine Layout-Beschreibung des Objekts und dessen Strukturumgebung bereitgestellt werden, wobei im Schritt (c) der Meßfehler abhängig von der bereitgestellten Layout-Beschreibung bestimmt wird.

4. Verfahren nach Anspruch 1, bei dem das erfaßte Bild das Objekt und dessen Strukturumgebung umfaßt, und bei dem ferner eine Layout-Beschreibung des Objekts und dessen Strukturumgebung bereitgestellt werden, wobei im Schritt (c) der Meßfehler abhängig von der bereitgestellten Layout-Beschreibung bestimmt wird.

5. Verfahren nach einem der Ansprüche 1 bis 4, bei dem die Bestrahlungsquelle eine Lichtquelle oder eine Elektronenstrahlquelle ist.

6. Verfahren nach einem der Ansprüche 1 bis 5, bei dem das korrigierte Meßergebnis ausgegeben wird (110).

## Claims

1. A method of correcting errors occurring in the measurement of an object whose dimensions are within the range of a wavelength of a radiation used for measuring the object due to the proximity effect, comprising the following steps:
(a) generating (102) an intensity image of the object to be measured;
(b) measuring (106) the object of interest imaged in the generated intensity image;
(c) determining (112; 200) a measurement error due to the proximity effect caused by structures which are arranged in the vicinity of the object to be measured; and
(d) correcting (108) the measurement of step (b) in dependence on the measurement error determined.

2. A method according to claim 1, wherein the detected image contains the object and the structural surroundings thereof, the measurement error being determined in step (c) in dependence on the structural surroundings contained in the detected image.

3. A method according to claim 1, wherein the detected image only contains the object to be imaged and wherein a layout description of the object and of its structural surroundings is additionally provided, the measurement error being determined in step (c) in dependence on the layout description provided.

4. A method according to claim 1, wherein the detected image contains the object and the structural surroundings thereof, and wherein a layout description of the object and of its structural surroundings is additionally provided, the measurement error being determined in step (c) in dependence on the layout description provided.

5. A method according to one of the claims 1 to 4, wherein the irradiation source is a light source or an electron beam source.

6. A method according to one of the claims 1 to 5, wherein the corrected measurement result is outputted (110).

## Revendications

1. Procédé pour la correction d'erreurs qui se produisent, lors de la mesure d'un objet dont les dimensions sont de l'ordre d'une longueur d'onde d'un rayonnement qui est utilisé pour la mesure, par suite de l'effet de proximité, aux étapes suivantes consistant à :
(a) générer (102) une image d'intensité de l'objet à mesurer ;
(b) mesurer (106) l'objet d'intérêt reproduit dans l'image d'intensité générée ;
(c) déterminer (112 ; 200) une erreur de mesure produite par suite de l'effet de proximité, qui est provoquée par des structures qui sont disposées dans le voisinage de l'objet à mesurer ; et
(d) corriger (108) la mesure de l'étape (b) en fonction de l'erreur de mesure déterminée.

2. Procédé selon la revendication 1, dans lequel l'image captée comporte l'objet et son environnement de structures, l'erreur de mesure étant déterminée, à l'étape (c), en fonction de l'environnement de structures contenu dans l'image captée.

3. Procédé selon la revendication 1, dans lequel l'image captée ne comporte que l'objet à reproduire et dans lequel sont, par ailleurs, mis à disposition une description de la disposition de l'objet et son environnement de structures, l'erreur de mesure étant déterminée, à l'étape (c), en fonction de la description de la disposition mise à disposition.

4. Procédé selon la revendication 1, dans lequel l'image captée comporte l'objet et son environnement de structures et dans lequel sont, par ailleurs, mis à disposition une description de la disposition de l'objet et son environnement de structures, l'erreur de mesure étant déterminée, à l'étape (c), en fonction de la description de la disposition mise à disposition.

5. Procédé selon l'une des revendication 1 à 4, dans lequel la source de rayonnement est une source lumineuse ou une source de faisceau électronique.

6. Procédé selon l'une des revendication 1 à 5, dans lequel est sorti le résultat de mesure corrigé (110).
